Europäisches Patentamt

European Patent Office

Office européen des brevets

(11) Numéro de publication: **0 287 431**
**A1**

## DEMANDE DE BREVET EUROPEEN

(21) Numéro de dépôt: **88400822.8**

(22) Date de dépôt: **06.04.88**

(51) Int. Cl.⁴: **G 01 G 19/02**
**G 01 G 3/14**

(30) Priorité: **10.04.87 FR 8705133**

(43) Date de publication de la demande:
**19.10.88 Bulletin 88/42**

(84) Etats contractants désignés:
**AT BE CH DE ES FR GB GR IT LI LU NL SE**

(71) Demandeur: **M.P.I. Metrologle Pesage International S.A.**
**22 Avenue Albert Einstein**
**F-93155 Le Blanc-Mesnil (FR)**

(72) Inventeur: **Chassaigne, Michel**
**6, rue des Delieuses**
**78430 Louveciennes (FR)**

(74) Mandataire: **Dossmann, Gérard·et al**
**Bureau D.A. Casalonga-Josse Morassistrasse 8**
**D-8000 Munich 5 (DE)**

(54) **Système de pesage comprenant un récepteur de charge à mobilité limitée dans le sens horizontal.**

(57) Système de pesage avec un récepteur de charge à mobilité horizontale, prenant appui sur une base fixe par plusieurs capteurs présentant des portées bombées.

Les portées bombées (20, 21) présentant un rayon de courbure assurant une auto-stabilisation du capteur (11) et donc du récepteur de charge.

Application : notamment aux tabliers de ponts-bascules.

FIG.3

EP 0 287 431 A1

Bundesdruckerei Berlin

## Description

## SYSTEME DE PESAGE COMPRENANT UN RECEPTEUR DE CHARGE A MOBILITE LIMITEE DANS LE SENS HORIZONTAL.

La présente invention se rapporte à un système de pesage comprenant un récepteur de charge prenant appui sur une base fixe par plusieurs capteurs, notamment du type à jauges de contrainte, présentant des portées bombées autorisant une mobilité limitée de récepteur de charge dans le sens horizontal.

Grâce aux portées bombées des capteurs, ces derniers ne reçoivent que les charges verticales correspondant aux masses à peser, alors que les efforts horizontaux qui seraient susceptibles de fausser le résultat de la mesure n'ont pas d'action sur les capteurs.

Toutefois, sur les systèmes de pesage connus de ce type, il est nécessaire de maintenir le récepteur de charge dans le plan horizontal par des moyens de stabilisation comprenant généralement des barres horizontales entre le récepteur de charge et la base fixe. Or, ces moyens de stabilisation qui doivent être réglables entraînent non seulement une complication de la structure de l'ensemble du système de pesage, mais nécessitent également une vérification périodique de leur tension afin de ne pas altérer la précision du système de pesage.

La présente invention a pour objet un système de pesage du type défini ci-dessus qui, tout en comportant des capteurs à portées bombées recevant uniquement les charges verticales dues aux masses à peser, ne nécessite pas les moyens de stabilisation des systèmes de pesage connus de ce type, qui présente de ce fait une structure simplifiée et une meilleure fiabilité, et qui ne nécessite pas les vérifications périodiques nécessaires au fonctionnement précis des systèmes connus.

Sur le système de pesage conforme à l'invention comprenant un récepteur de charge prenant appui sur une base fixe par plusieurs capteurs, notamment du type à jauges de contrainte, présentant des portées bombées autorisant une mobilité limitée du récepteur de charge dans le sens horizontal, lesdites portées bombées sont établies de manière à assurer une auto-stabilisation du récepteur de charge dans le plan horizontal.

Suivant un mode de réalisation de l'invention, chaque capteur comprend un corps d'épreuve sollicité en compression, ayant à ses deux extrémités des portées bombées dont au moins la portée bombée inférieure portant sur une surface de base plane horizontale présente un rayon de courbure supérieur à la moitié de la hauteur du corps d'épreuve et de préférence au moins égal à la hauteur du corps d'épreuve.

Suivant un autre mode de réalisation de l'invention, chaque capteur comprend un corps d'épreuve à double flexion prenant appui sur une embase par plusieurs éléments de soutien montés avec du jeu horizontal dans les trous borgnes verticaux opposés du corps d'épreuves et de l'embase, les deux extrémités de chaque élément de soutien constituant des portées bombées avec un rayon de courbure supérieur à la moitié de la hauteur de l'élément de soutien et de préférence au moins égal à la hauteur de l'élément de soutien, lesdites portées bombées prenant appui sur le fond plat des trous borgnes, le corps d'épreuve présentant, entre lesdits trous, un appui à portée bombée pour l'application de la charge au corps d'épreuve.

Les portées bombées peuvent être par exemple bombées de façon cylindrique, auquel cas le récepteur de charge est mobile horizontalement suivant un axe, mais de préférence ces portées sont bombées de façon sphérique, auquel cas le récepteur de charge est mobile horizontalement suivant toutes les directions et subit un effet d'auto-stabilisation suivant toutes les directions.

Le système de pesage conforme à l'invention est applicable à tous les appareils de pesage à récepteur de charge mobile horizontalement, par exemple des bascules ou balances à plateau ou à trémie, des appareils de pesage et de dosage à bande, etc.. Un exemple d'application préféré est constitué par les ponts bascules à tablier.

En se référant aux dessins schématiques annexés, on va décrire ci-après plus en détail deux modes de réalisation illustratifs et non limitatifs de l'objet de l'invention;

sur les dessins :

la figure 1 représente schématiquement un tablier de pont-bascule reposant sur des capteurs de compression à auto-stabilisation;

la figure 2 est une coupe d'un capteur de compession à auto-stabilisation;

la figure 3 représente une autre mode de réalisation d'un capteur à auto-stabilisation;

la figure 4 est une vue pris dans le sens de la flèche IV de la figure 3, partiellement en coupe;

la figure 5 est une coupe suivant V-V de la figure 3.

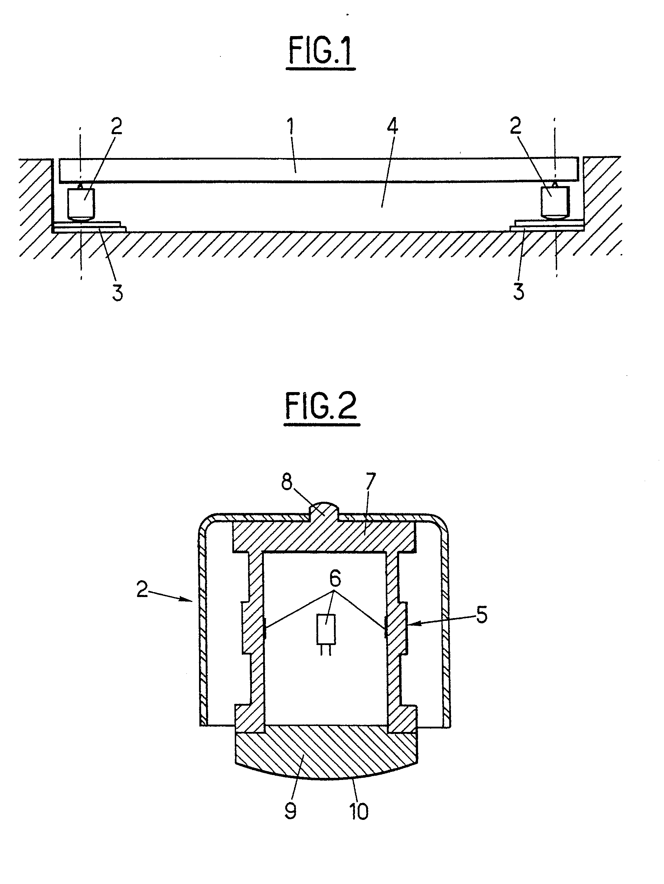

Selon la figure 1, le tablier 1 d'un pont-bascule prend appui, par l'intermédiaire de capteurs de compression 2, sur des plaques de base 3 disposées sur le fond d'une fosse 4.

Selon la figure 2 qui représente plus en détail l'un des capteurs 2, ce capteur comprend un corps d'épreuve 5 de forme générale cylindrique, muni de quatre jauges de contrainte 6 disposées ici sur la face interne du corps d'épreuves 5 et montées de façon usuelle en pont de Wheatstone. Le corps d'épreuve 5 est fermé à l'extrémité supérieure par une plaque 7 portant un bouton central 8 constituant une portée sphérique sur laquelle vient prendre appui le tablier 1 du pont bascule. L'extrémité inférieure du corps d'épreuve 5 est fermée par une plaque 9 ayant une base sphérique 10 dont le moyen de courbure est supérieur à la hauteur du capteur 2. Cette base sphérique 10 portant sur une surface plant horizontale procure un effet d'auto-stabilisation au capteur 2 et de ce fait au tablier 1 du pont-bascule, qui présente une certaine mobilité horizontale. En effet, sous l'action de la charge verticale à laquelle est soumis le capteur 2, toute déviation de ce dernier de la position d'équilibre illustrée sur la figure 2, sous l'effet de forces horizontales ou obliques exercées sur le tablier 1, provoque une force de rappel proportionnelle à la charge du tablier 1. Cette force de rappel redresse le capteur, c'est-à-dire le ramène à la position d'équilibre, lorsque l'action de la force de déviation cesse.

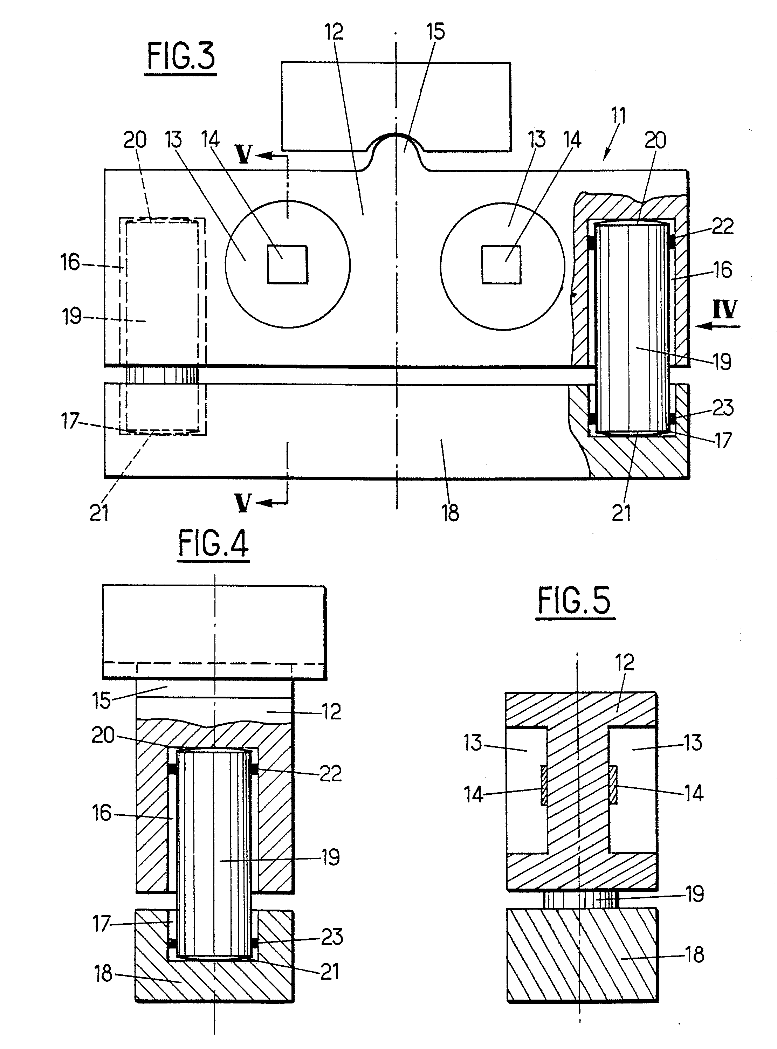

Dans le mode de réalisation suivant les figures 3 à 5, un capteur 11 qui peut être substitué à chacun des capteur 2 de la figure 2 comporte un corps d'épreuve 12 à double flexion de forme générale parallélépipèdique, muni dans ses faces latérales opposées de deux paires d'évidements borgnes 13 opposés à l'endroit desquels le corps d'épreuve 12 présente une section en double T, comme le montre la figure 5. Un capteur d'effort tel qu'une jauge de contrainte 14, est disposé sur le fond vertical de chaque évidement 13. Les jauges 14 sont de façon usuelle montées en pont de Wheatstone.

Le corps d'épreuve 12 présente sur les dessus, symétriquement entre les deux paires d'évidements 13, un bossage 15 de forme bombée constituant un portée cylindrique (ou sphérique) pour l'application de la charge au corps d'épreuve 12.

Au voisinage des deux extrémités longitudinales du corps d'épreuve 12, deux trous borgnes 16 cylindriques sont ménagés dans la face inférieure du corps d'épreuve 12.

Deux trous borgnes 17 cylindriques, ayant le même diamètre que les trous 16, sont ménagés dans la face supérieure d'une semelle de base 18 de telle manière que lorsque le corps d'épreuve 12 est superposé à le semelle 18, ses trous borgnes 16 se trouvent alignés avec les trous borgnes 17 de la semelle 18.

Les trous 16 et 17 présentent un fond plat horizontal.

Le corps d'épreuve 17 est soutenu à faible distance au-dessus de la semelle 18 par deux éléments de soutien 19 cylindriques, ayant un diamètre inférieur à celui des trous 16, 17, de sorte que les éléments de soutien 19 de trouvent avec du jeu radial (horizontal) dans les trous 16, 17.

Les deux extrémités 20, 21 des éléments de soutien 19 sont bombées de façon sphérique avec un rayon de courbure sensiblement égal à la hauteur des éléments 19.

Un anneau 22, 23 en matière élastique est inséré, au voisinage de chaque extrémité des éléments de soutien 19, entre la paroi latérale de chaque élément de soutien 19 et la paroi latérale du trou 16, 17.

Dans ce mode de réalisation également dans lequel le corps d'épreuve, toute déviation du capteur 11 de la position d'équilibre illustrée par les figures 3 à 5, sous l'effet d'une force ou d'une composante de force horizontale, entraîne une inclinaison des éléments de soutien 19. Compte tenu de la courbure des portées sphériques 20, 21 des éléments 19, cette inclinaison engendre une force de rappel dont l'importance est fonction de l'inclinaison des éléments 19 et de la charge verticale agissant sur le capteur 11, et sous l'effet de laquelle, lorsque la force ou composante de force horizontale disparaît, le capteur revient de lui-même à la position d'équilibre représentée.

Il y a lieu de noter que les portées bombées 10, 20, 21, dans les deux modes de réalisation représentés, au lieu d'être de forme sphérique, pourraient être de forme cylindrique si un effet d'auto-stabilisation est recherché suivant un axe seulement.

Enfin, le système de pesage conforme à l'invention est applicable à des appareils autres que des ponts-bascules, comportant un récepteur de charge mobile horizontalement.

## Revendications

1. Système de pesage comprenant un récepteur de charge prenant appui sur une base fixe par plusieurs capteurs, notamment du type à jauges de contrainte, présentant des portées bombées de manière à assurer une auto-stabilisation du récepteur de charge (1) dans le plan horizontal, caractérisé par le fait que chaque capteur (11) comprend un corps d'épreuve (12) à double flexion prenant appui sur une semelle de base (18) par plusieurs éléments de soutien (19) montés avec du jeu horizontal dans des trous borgnes verticaux opposés (16, 17) du corps d'épreuve (12) et de la semelle de base (18), les deux extrémités de chaque élément de soutien constituant des portée bombées (20, 21) ayant un rayon de courbure supérieur à la moitié de la hauteur de l'élément de soutien (19) et prenant appui sur le fond plat des trous borgnes (16, 17), le corps d'épreuve présentant, entre lesdits trous (16, 17), un appui (15) à portée bombée pour l'application de la charge au corps d'épreuve.

2. Système suivant la revendication 1, caractérisé par le fait que le rayon de courbure des portées bombées (20, 21) est au moins égal à la hauteur des éléments de soutien (19).

3. Système suivant la revendication 1 ou 2, caractérisé par le fait que les éléments de soutien (19) et les trous borgnes (16, 17) sont cylindriques et que les extrémités des éléments de soutien constituent des portées (20, 21) bombées de façon sphérique.

4. Application du système suivant l'une quelconque des revendications précédentes à des tabliers de ponts-bascules.

0287431

# FIG.1

# FIG.2

**FIG.3**

**FIG.4**

**FIG.5**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | DE-A-3 544 885 (PFISTER GmbH) * Colonne 3, lignes 24-29,37-42,63-65; revendications 1-13; figures 1-3 * --- | 1-4 | G 01 G 19/02 G 01 G 3/14 |
| A | US-A-4 554 987 (B.N. DILLON) * Colonne 1, lignes 61-66; colonne 3, lignes 42-53; colonne 4, ligne 40 - colonne 5, ligne 21; figures 2,3,5,11 * --- | 1-4 | |
| A | US-A-2 901 235 (R.O. BRADLEY) * Colonne 4, lignes 3-14; figure 3 * --- | 1-4 | |
| A | MATERIALS HANDLING NEWS, vol. 106, septembre 1966, pages 50-53; "Static weighing" * Page 50, alinéa 3; figures de droite * ----- | 1 | |

**DOMAINES TECHNIQUES RECHERCHES (Int. Cl.4)**

G 01 G

Le présent rapport a été établi pour toutes les revendications

| Lieu de la recherche | Date d'achèvement de la recherche | Examinateur |
|---|---|---|
| LA HAYE | 08-08-1988 | GANCI P.A. |